Europäisches Patentamt

European Patent Office

Office européen des brevets

(11) Veröffentlichungsnummer: **0 257 183 B1**

(19)

(12) **EUROPÄISCHE PATENTSCHRIFT**

(45) Veröffentlichungstag der Patentschrift: **23.02.94**

(21) Anmeldenummer: **87104637.1**

(22) Anmeldetag: **28.03.87**

(51) Int. Cl.⁵: **H04L 25/49**

(54) Verfahren zur Rückgewinnung von Digitalsignalen nach Demodulation.

(30) Priorität: **26.08.86 DE 3628993**

(43) Veröffentlichungstag der Anmeldung:
**02.03.88 Patentblatt 88/09**

(45) Bekanntmachung des Hinweises auf die
Patenterteilung:
**23.02.94 Patentblatt 94/08**

(84) Benannte Vertragsstaaten:
**AT BE CH DE ES FR GB GR IT LI LU NL SE**

(56) Entgegenhaltungen:
**FR-A- 2 049 578**
**US-A- 4 302 845**

(73) Patentinhaber: **ROBERT BOSCH GMBH**
**Postfach 30 02 20**
**D-70442 Stuttgart(DE)**

(72) Erfinder: **Ketterling, Hans-Peter, Dipl.-Ing.**
**Manfred-von-Richthofen-Strasse 11**
**D-1000 Berlin 42(DE)**
Erfinder: **Pfitzmann, Dieter, Dipl.-Ing.**
**Onkel-Tom-Strasse 21**
**D-1000 Berlin 37(DE)**

**Beschreibung**

Stand der Technik

Die Erfindung geht von einem Verfahren nach der Gattung des Hauptanspruchs aus.

Es ist bekannt (P. Gerdsen, Digitale Übertragungstechnik, Teubner, Stuttgart, 1983), mehrwertige, zum Beispiel vierwertige, Digitalsignale zu übertragen. Es ist weiterhin bekannt (G. Söden, K. Tröndle, Digitale Übertragungstechnik, Springer, Berlin, 1985), mehrwertige Digitalsignale vor einer Übertragung, zum Beispiel durch Frequenzmodulation, derart zu bearbeiten, daß anstelle der rechteckigen Signalform mit steilen Flanken eine mehr oder weniger abgerundete Signalform tritt, so daß man ein verhältnismäßig schmalbandiges Basisbandsignal erhält. Schwierigkeiten bereitet jedoch bei der empfangsseitigen Demodulation des Basisbandsignals das sichere Erkennen der digitalen Wertstufen und des Übertragungstaktes bei Übertragungsstörungen durch Rauschen, Störimpulse oder andere Störsignale.

Es ist weiterhin eine Vorrichtung zum Bearbeiten von Signalen, die in digitaler Form übertragen werden, bekannt (FR-A-2049578). Die Vorrichtung enthält Mittel zur Digitalisierung der in analoger Form vorliegenden Basisband-Signale. Die bei der Digitalisierung erhaltenen Abtastwerte werden zwischengespeichert, und aus den zwischengespeicherten Abtastwerten wird ein Abtast-Mittelwert gebildet.

Vorteile der Erfindung

Das erfindungsgemäße Demodulationsverfahren mit den kennzeichnenden Merkmalen des Hauptanspruchs hat gegenüber den bisherigen Verfahren den Vorteil, daß durch eine Mehrfachabtastung eines jeden Symbols eine bessere Erkennung des Symbols bzw. der betreffenden digitalen Wertstufe sowie eine einwandfreie Rückgewinnung des Übertragungstaktes möglich ist.

Durch die in den Unteransprüchen aufgeführten Maßnahmen sind vorteilhafte Weiterbildungen und Verbesserungen des im Hauptanspruch angegebenen Verfahrens möglich. Ein bevorzugtes Anwendungsgebiet für das erfindungsgemäße Verfahren ist ein digitales Funktelefonnetz.

Zeichnung

Ein Ausführungsbeispiel der Erfindung ist in der Zeichnung anhand mehrerer Figuren dargestellt und in der nachfolgenden Beschreibung anhand der Auswertung eines vierwertigen Signals näher erläutert. Die Zeichnung zeigt in

Fig. 1      den zeitlichen Verlauf eines vierwertigen Digitalsignals,

Fig. 2      den zeitlichen Verlauf eines dem Digitalsignal nach Fig. 1 entsprechenden Basisbandsignals,

Fig. 3      ein vierwertiges Basisbandsignal zur Erläuterung der Demodulation und

Fig. 4      ein Blockschaltbild eines Basisbandsignal-Demodulators für vierwertige Signale.

Beschreibung der Erfindung

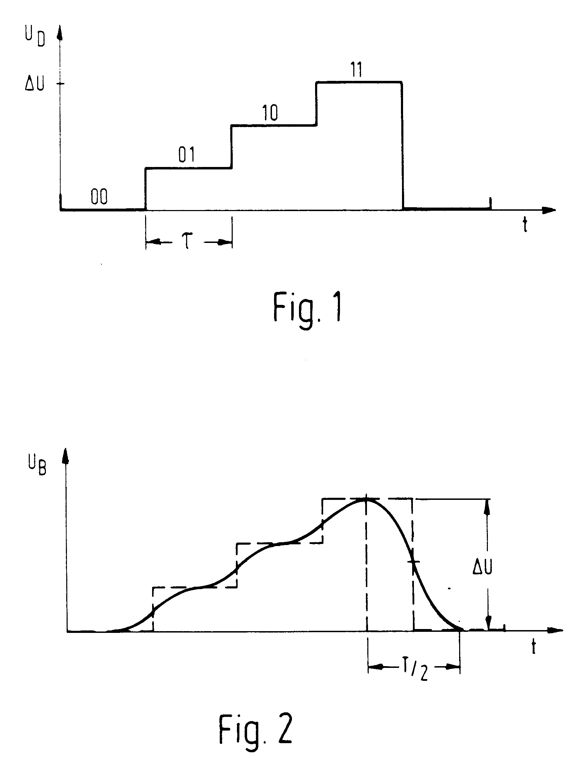

In Fig. 1 ist ein Vierlagen-Digitalsignal mit den Digitalwerten "00", "01", "10", "11" gezeigt, wobei jedem Digitalwert ein Spannungswert $U_D$ zugeordnet ist und der höchste Digitalwert "11" den Spannungswert $\Delta U$ aufweist. Jeder Digitalwert hat eine Symboldauer $\tau$. Zur Übertragung des Digitalsignals wird dieses in ein von hohen Frequenzanteilen befreites analoges Modulationssignal - im folgenden Basisbandsignal $U_B$ genannt - umgeformt; vgl. Fig. 2. Mit $T/2 = \tau$ ist die halbe Grundwellen-Periodendauer bezeichnet. Das Basisbandsignal $U_B$ wird vorzugsweise als frequenzmoduliertes Signal übertragen.

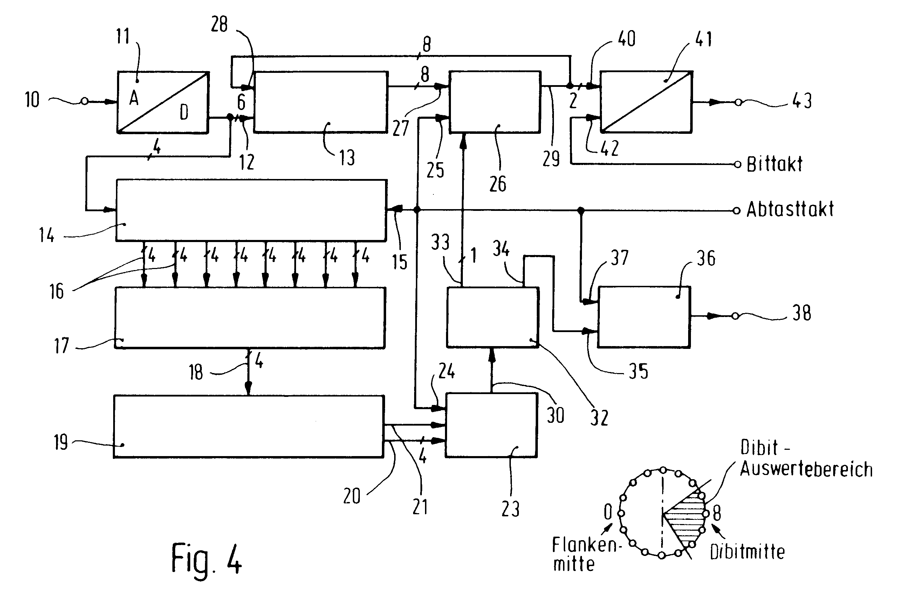

Empfangsseitig wird dann das frequenzmodulierte Signal demoduliert, und anschließend wird aus dem durch die Demodulation erhaltenen Basisbandsignal $U_B$ das vierwertige Datensignal gemäß Fig. 1 zurückgewonnen. Dazu dient der im folgenden beschriebene und in Fig. 4 gezeigte Basisbandsignal-Demodulator. Ein Eingang 10 des Basisbandsignal-Demodulators ist mit einem Analog-Digital-Wandler 11 verbunden, dessen Ausgang erstens mit einem ersten Eingang 12 eines Addierers 13 und zweitens mit einem Eingang eines Zwischenspeichers 14 verbunden ist. Einem Takteingang 15 des Zwischenspeichers wird ein Abtasttakt von etwa zum Beispiel dem Sechzehnfachen der Symbolrate zugeführt. Acht Ausgänge 16 des Zwischenspeichers 14 sind mit acht Eingängen eines Komparators 17 verbunden, dessen Ausgang 18 mit einem Eingang eines Kodewandlers 19 in Verbindung steht. Ein erster Ausgang 20 und ein zweiter Ausgang 21, das ist ein Preset-Signalausgang, sind mit entsprechenden Eingängen eines Binärzählers 23 verbunden. Der Binärzähler 23 hat einen Takteingang 24, dem ebenso wie einem Takteingang 25 einer Latch-Schaltung 26 der Abtasttakt zugeführt wird. Ein Signaleingang 27 der Latch-Schaltung 26 ist mit dem Ausgang des Addierers 13 verbunden, dessen zweiter Eingang 28 mit einem Ausgang 29 der Latch-Schaltung 26 verbunden ist.

Ein Ausgang 30 des Binärzählers 23 ist mit einem Eingang eines Kodewandlers 32 verbunden, an dessen ersten Ausgang 33 sich der Reset-Eingang der Latch-Schaltung 26 und an dessen zweiten Ausgang 34 sich ein Signaleingang 35 einer zweiten Latch-Schaltung 36 anschließt. Einem Takteingang 37 der zweiten Latch-Schaltung 36 wird ebenfalls der Abtasttakt zugeführt. An ihrem Ausgang 38 gibt die zweite Latch-Schaltung 36 das weiter unten erläuterte Symbol-Mittensignal ab.

Der Ausgang 29 der ersten Latch-Schaltung 26 steht mit einem ersten Eingang 40 eines Parallel-Serienwandlers 41 in Verbindung, dessen zweiten Eingang, das ist ein Takteingang, ein Bittakt von zum Beispiel der doppelten Symbolrate bei vierwertiger Modulation zugeführt wird. Der Parallel-Serienwandler 41 weist einen Ausgang 43 auf, an dem der Empfangs-Bitstrom entsprechend dem Bitsignal-Schema nach Fig. 1 zur Verfügung steht. Die Verbindungen zwischen den einzelnen Digitalstufen in Fig. 4 sind durch jeweils eine Leitung dargestellt, an der die Zahl der jeweiligen Leitungsadern vermerkt ist. Rechts unterhalb des Blockschaltbildes nach Fig. 4 ist symbolisch dargestellt, wie bei einem Symbol-Abtastzyklus die Symbol-Mitte festgestellt wird.

Der Addierer 13 ist vorzugsweise ein 8-Bit-Volladdierer, der Zwischenspeicher 14 ein 8•4-Bit-Wortschieberegister, der Komparator 17 ein 4•4-Wortpaarvergleicher, der Kodewandler 19 ein 4/5-Bit-Kodewandler, der Binärzähler 23 ein 4-Bit-Zähler, die erste Latch-Schaltung 26 ein 8-Bit-Latch, der Kodewandler 32 ein 2-aus-16-Kodewandler und die zweite Latch-Schaltung 36 ein 1-Bit-Latch.

Im folgenden wird die Funktion des Basisbandsignal-Demodulators nach Fig. 4 erläutert.

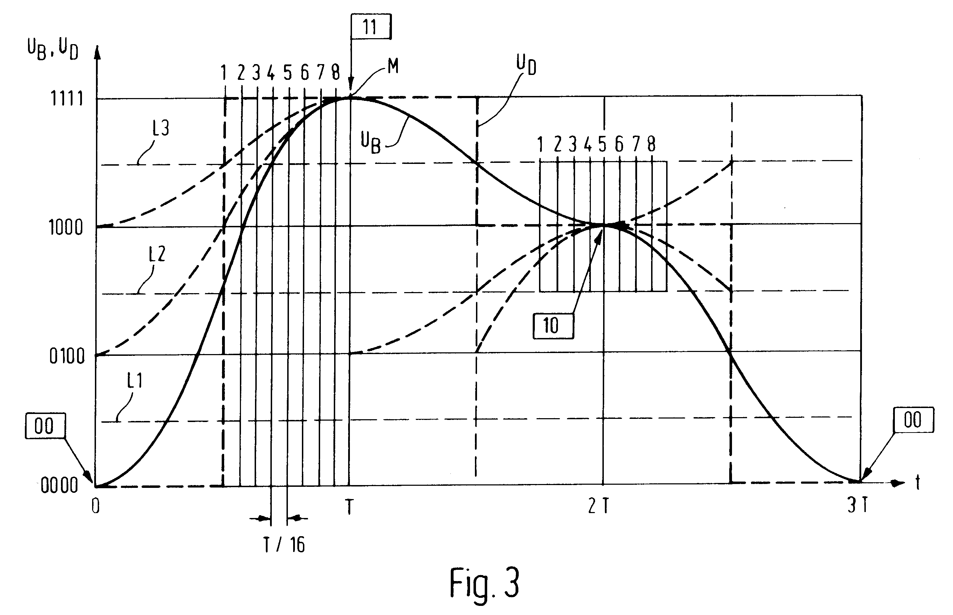

An dem Eingang 10 des Analog-Digital-Wandlers 11 liegt das zu demodulierende Basisbandsignal $U_B$, das beispielsweise den in Fig. 3 gezeigten zeitlichen Verlauf hat. Die kurvenförmigen, gestrichelten Linien in Fig. 3 zeigen mehrere, zwischen den verschiedenen Symbolen mögliche Übergänge des Basisbandsignals $U_B$.

Das Basisbandsignal $U_B$ wird zunächst mit dem Analog-Digital-Wandler 11 mit einer Auflösung von zum Beispiel 6 Bit digitalisiert, und zwar in 16 Abtastschritten pro Dibit. Mit dem dazu erforderlichen, beispielsweise sechzehnfachen Abtasttakt bezogen auf die Symbolrate werden die Abtastwerte in den Zwischenspeicher 14 übernommen, der die jeweils acht letzten Abtastwerte - prinzipiell kann auch eine andere Anzahl gewählt werden -, also den Kurvenverlauf eines halben Symbols, enthält. In Fig. 3 ist durch die dicken gestrichelten Linien angedeutet, wie das durch die Demodulation des Basisbandsignals $U_B$ zurückzugewinnende Digitalsignal $U_D$ aussehen müßte. Das sich an den Analog-Digital-Wandler 11 anschließende Addierwerk aus dem Addierer 13 und der ersten Latch-Schaltung 26 bildet die Summe der jeweils letzten vier Abtastwerte. Dies entspricht einer Mittelwertbildung dieser Abtastwerte; prinzipiell kann auch eine andere Zahl gewählt werden. Die hier erforderliche Teilung der Summe durch vier wird durch Verschiebung der Abgriffe um zwei bewerkstelligt. Anders ausgedrückt, werden nur das Mittensignal-Bit und das nächst niederwertige Bit, welche die eigentliche Symbol-Information tragen, zum Parallel-Serienwandler 41 weitergegeben und an dessen Ausgang 43 mit dem Bittakt als stetiger Empfangs-Bitstrom ausgegeben. Der Empfangs-Bitstrom am Ausgang 43 wird gemäß dem Beispiel in Fig. 3 gebildet aus dem Digitalwert "00" für das erste halbe Symbol, an das sich der Digitalwert "11" für das zweite volle Symbol, der Digitalwert "10" für das dritte Symbol und der Digitalwert "00" für das vierte, halbe Symbol anschließen. Aus den vier gezeigten Zuständen wird schließlich die Bitfolge "00 11 10 00" gebildet.

Die waagerecht gestrichelten Linien L1, L2 und L3 in Fig. 3 zeigen die Spannungsgrenzen an, an denen eine Abtastspannung $U_B$ zu dem jeweils nächsten Abtastwert gerechnet wird.

Anstelle des in dem Ausführungsbeispiel verwendeten Vierlagen-Digitalsignals ist es vielfach vorteilhaft, andere Kodierungen zu benutzen, zum Beispiel den Gray-Kode.

**Patentansprüche**

1. Verfahren zum Demodulieren von Digitalsignalen, die in Form eines analogen Mehrlagen-Basisbandsignals vorliegen, das digitalisiert wird, wobei Abtastwerte entstehen, aus denen nach einer Zwischenspeicherung ein Abtast-Mittelwert gebildet wird, **dadurch gekennzeichnet,** daß nacheinander jeweils eine bestimmte Anzahl der zwischengespeicherten Abtastwerte paarweise auf Übereinstimmung geprüft werden, daß beim Vorliegen von mindestens zwei aufeinanderfolgenden, annähernd übereinstimmenden Abtastwert-Paaren jeweils ein Mittensignal gebildet wird, daß der Abtast-Mittelwert aus je einer bestimmten Zahl von Abtastwerten erzeugt wird und daß aus dem Mittensignal, dem Abtast-Mittelwert und einem vorgegebenen Bittakt ein stetiger Empfangs-Bitstrom während der Dauer des Mittensignals an einem Ausgang des Demodulators erscheint.

2. Verfahren nach Anspruch 1, dadurch gekennzeichnet, daß das Basisbandsignal ($U_B$) ein Vierlagen-Basisbandsignal ist.

3. Verfahren nach Anspruch 1 oder 2, dadurch gekennzeichnet, daß die Digitalsignale Dibitsignale sind und vierwertigen Symbolen entsprechen.

## Claims

1. Method for demodulating digital signals which are present in the form of an analogue multi-level baseband signal which is digitized, samples being produced from which a sample mean is formed after buffer storage, characterized in that successively in each case a certain number of the temporarily stored samples are checked for correspondence pair-by-pair, that when at least two successive approximately corresponding sample pairs are present, in each case a midpoint signal is formed, that the sample mean is generated from in each case a certain number of samples and that from the midpoint signal, the sample mean and a predetermined bit clock, a constant received bit stream appears at an output of the demodulator during the period of the midpoint signal.

2. Method according to Claim 1, characterized in that the baseband signal ($U_B$) is a four-level baseband signal.

3. Method according to Claim 1 or 2, characterized in that the digital signals are dibit signals and correspond to four-valued symbols.

## Revendications

1. Procédé pour démoduler des signaux numériques, qui se présentent sous la forme d'un signal analogique de bande de base à plusieurs niveaux, qui est numérisé, dans lequel se forment des valeurs de balayage, à partir desquelles on forme après une mise en mémoire intermédiaire une valeur moyenne de balayage, procédé caractérisé en ce que l'on vérifie les unes après les autres la coïncidence par paire respectivement d'un nombre déterminé de valeurs de balayage mises en mémoire intermédiaire, en ce que dans le cas où il y a au moins deux paires de valeurs de balayage se correspondant approximativement se suivant l'une l'autre, on forme respectivement un signal moyen, en ce que la valeur moyenne de balayage est produite à partir d'un nombre déterminé de valeurs de balayage, et qu'à partir du signal moyen, d'une valeur moyenne de balayage et d'un rythme numérique prédéfini apparait un courant de bits permanent de réception pendant la durée du signal moyen sur une sortie du démodulateur.

2. Procédé selon la revendication 1, caractérisé en ce que le signal de bande de base ($U_B$) est un signal de bande de base à quatre niveaux.

3. Procédé selon la revendication 1 ou 2, caractérisé en ce que les signaux numériques sont des signaux de paire de bits et correspondent à des symboles quadrivalents.

Fig. 1

Fig. 2

Fig. 3

Bittakt

Abtasttakt

Dibit - Auswertebereich

Dibitmitte

Flanken- mitte

Fig. 4